# EUROPEAN PATENT SPECIFICATION

(11) **EP 0 596 299 B1**
(45) Date of publication and mention of the grant of the patent: **15.09.1999**
(21) Application number: 93116692.0
(22) Date of filing: 15.10.1993
(51) Int. Cl.: B01D 37/04

(54) **Method and plant for filtering a chemical product, such as a solvent or the like, without the use of pumps**
Verfahren und Anlage zum Filtern eines chemischen Produktes, wie ein Lösungsmittel oder dergleichen, ohne Benutzung von Pumpen
Procédé et installation pour la filtration d'un produit chimique, tel qu'un solvant ou similaire, sans utilisation des pompes

(30) Priority: 06.11.1992 IT MI922559
(43) Date of publication of application: 11.05.1994
(73) Proprietor: Sala, Ambrogio, I-20041 Agrate Brianza (Milano) (IT)
(72) Inventor: Sala, Ambrogio, I-20041 Agrate Brianza (Milano) (IT)
(74) Representative: Giambrocono, Alfonso, Dr. Ing.

(56) References cited:
- FR-E- 2 597
- US-A- 1 761 401

## Description

This invention relates to method for filtering a chemical product in the liquid state, such as a solvent or the like, in accordance with the introduction to the main method claim. The invention also relates to a plant for implementing said method, in accordance with the characterising part of the independent plant claim.

In recent years the filtration of chemical products (such as sulphuric and hydrochloric acids) used in particular in the formation of semiconductor devices and of semiconductors themselves has involved considerable research in an attempt to achieve their increasingly more thorough purification.

Various methods (and corresponding devices or plants) are known for effecting such filtration.

In a first method, the chemical product is fed to the filtering station using mechanical pumping members which, however, are used to force the liquid or said product through usual pipes (connecting a storage tank to said station) with a pulsing movement and with line voids. This pulsation can however considerably damage the filtering member (or filter) present in the filtering station, so that it has to be periodically and frequently replaced so as not to prejudice the purification level of the liquid on which it operates. In addition, the pumping members have the drawback of requiring frequent maintenance. This all results in a considerable operating cost of the filtering device or plant, which negatively affects the cost of the chemical product used for example by the semiconductor industry.

An example of a plant in which said first method is implemented is disclosed by FR-E-2597 which relates to a plant for filtering wine and other liquids in which mechanical pumping means are provided for feeding the liquid to be filtered to a storage tank located at a level higher than that of vessels to which said liquid in then fed. The vessels are connected in series and are subsequently fed by the liquid moved by the pump while the liquid into the storage tank avoids sudden loss of pressure into the liquid coming to a filter.

Another known solution, which is the subject matter of US 1761401, relates to a mechanism for feeding and automatically controlling the flow of pulp into a continuosly operated filter without the use of a power driven pump. This known solution comprises a monte-jus comprising a tank connected to a continuous filter (located at a level higher than that of the tank) through a first pipe wherein a one way valve (or swing check valve) is located. Another swing check valve is located into a second pipe through which the pulp is introduced into the tank. The first and second pipes are connected to connection means located at the bottom of the tank and communicating with the latter. The tank is also connected to the filter by a compressed air pipe opening at the top of the tank or monte-jus. The movement of the pulp from the tank to the filter is obtained by feeding high pressure air into the tank.

In another method, the chemical product is fed from the storage tank to the filtering station by the use of usual systems for creating vacuum in the pipes connecting the tank to the filtering station. This method is very valid if applied in the laboratory, in which the liquid quantity to be purified is always limited, however it becomes very expensive if applied at the industrial level where the throughput of the liquid or chemical product to be filtered is high.

An object of the present invention is to provide a method which enables a chemical product, such as a usual chemical solution used in the semiconductor industry, to be filtered in an optimum manner without negatively affecting the mechanical stability of the filter.

A further object is to provide a method having an operating cost which is low and is less than that of analogous known methods.

A further object is to provide a method of the stated type which enables the liquid or chemical product to be fed to the filtering station at constant pressure and rate.

Another object of the present invention is to provide a plant for implementing the aforesaid method which is reliable and gives a high filtation yield.

A further object is to provide a plant of the stated type which is of low constructional and operating cost.

A further object is to provide a plant of the stated type with which the liquid to be filtered can be handled without damage to the filter.

These and further objects which will be apparent to the expert of the art are attained by a method in accordance with the characterising part of the relative independent claim.

The aforesaid objects are also attained by a plant in accordance with the relative independent claim.

The present invention will be more apparent from the accompanying drawing, which is provided by way of non-limiting example and in which:
Figure 1 is a schematic view of a plant according to the invention; and
Figure 2 is an enlarged cross-section through part of the plant of Figure 1.

With reference to said figures, the plant comprises a tank for containing a liquid to be filtered, such as a usual hydrochloric acid used in the semiconductor industry. The tank 1 is connected to an exit pipe 2 terminating in a "T" connector 3 from which feed pipes 4 and 5 extend to valve units 6 associated with buffer vessels 7 and 8 preferably constructed of polymer resin such as polytetrafluoroethylene (PTFE), tetrafluoroethylene-parafluoroalkylvinyl (PFA) or the like.

Each valve unit 6 is also preferably of polymer resin construction, advantageously as a single block, and comprises a first actuator 10 for its opening which operates on the relative feed pipe 4 or 5, and a second actuator 10 operating on a respective delivery pipe 12 or 13 extending from the corresponding vessel to terminate in an exit junction 14 to which both the pipes 12 and 13 are connected. From the junction 14 there extends a feed pipe 15 to a filtering station 16, from which a delivery pipe 17 extends terminating in the tank 1. The pipes 15 and 17 are connected to the station 16 via connectors 18. A usual pressure indicator 19 is connected to the pipe 15 and a pressure switch 20 is connected to the pipe 17, which incorporates a solenoid valve 21. This pressure switch indirectly provides a measurement of the degree of clogging of the filter (such as a microfilter, not shown) present in the station 16 on the basis of the pressure in the pipe 17. In this respect, when the filter is clogged the pressure in the pipe 17 falls substantially, this being sensed by the pressure switch 20, which then shuts off said pipe and in any known manner activates a visual and/or acoustic alarm 23. This pressure switch is preferably connected to a plant operating and control unit 25, preferably a microprocessor circuit.

The unit 25 is connected to the pressure indicator 19, to the actuators 10 and 11 of each valve unit 6 and to the solenoid valve 21. Via this latter it measures the pressure in the pipe 17 in known manner, and oil the basis of this measurement acts on the valve 21 by contracting or enlarging the section of the pipe 17 into which it is connected, so as to increase or reduce the liquid pressure in the station 16 and hence in the pipe 15. This enables the throughput of the liquid in the pipe 15 to be maintained constant and its flow to be maintained uniform and always at the same pressure (or about a predetermined value), independently of the degree of clogging of the filter in the station 16. In addition, when a first filter is replaced by a second with different characteristics, the pressure of the liquid to be filtered entering the station 16 can be varied by operating on the solenoid valve 21.

Each buffer vessel 7 and 8 comprises a cylindrical body 22 with its hollow interior 28 opening lowerly at 29 and 30 in positions corresponding with the actuators 10 and 11 of the associated valve unit 6.

The hollow interior 28 of each buffer 7 and 8 also opens upperly at 31 into a corresponding pipe 32 connected to a pressurizing circuit 33 (hydraulic and/or pneumatic) for the buffer vessel.

The circuit 33 comprises a main 35 containing a pressurized fluid immiscible with the product to be filtered. This fluid, to be known as the pressurizing fluid, is preferably dry nitrogen or air and is put and maintained under pressure in any known manner. From the main there extends a pipe 36 containing a solenoid valve 37 connected to and controlled by the unit 25. Downstream of the solenoid valve the pipe 36 divides into two pipes 38 terminating in said pipes 32. To each pipe 38 there is connected a part 39 of the circuit 33 comprising a filtering member or filter 40, a known pressure reducer 41 and a solenoid valve 42; a pressure gauge 43 is associated with the reducer 41. Each solenoid valve 42 and each reducer 41 is connected to the unit 25, which controls and regulates its operation. The presence of a pressure reducer in each pipe 38 is preferred to the (possible) solution comprising a single pressure reducer in the pipe 36 as it enables the pressure in each pipe 38 (and hence in each relative pipe 32) to be controlled on the basis of the geometrical characteristics of the hollow interior 28 of the buffer 7 and 8 to which each pipe 38 is operationally connected. This enables specific pressurizing fluid pressures to be achieved for each buffer, on the basis of its geometrical characteristics as stated, and of the technical characteristics of its construction. A pressure indicator 45 is preferably connected to each pipe 32 and connected to the unit 25.

Each pipe 32 is provided with a sensor 46 to measure the level of the liquid present in it to be filtered, and a solenoid valve 47. Each level sensor is for example of capacitive type and is connected to the unit 25, to which each solenoid valve 47 is also connected to enable the pressurizing fluid present in the pipe 32 to be released during the use of the plant; said solenoid valve or vent valve enables this fluid to reach a vent pipe 50 through which the pressurizing fluid of each pipe 32 can be removed therefrom, to release the pressure in the buffers 7 and 8.

Finally, these latter can be provided with usual heaters 51 to heat the liquid to be filtered present in the buffers when necessary. The heaters (for example usual electrical resistance elements) are connected to the unit 25 and controlled by it.

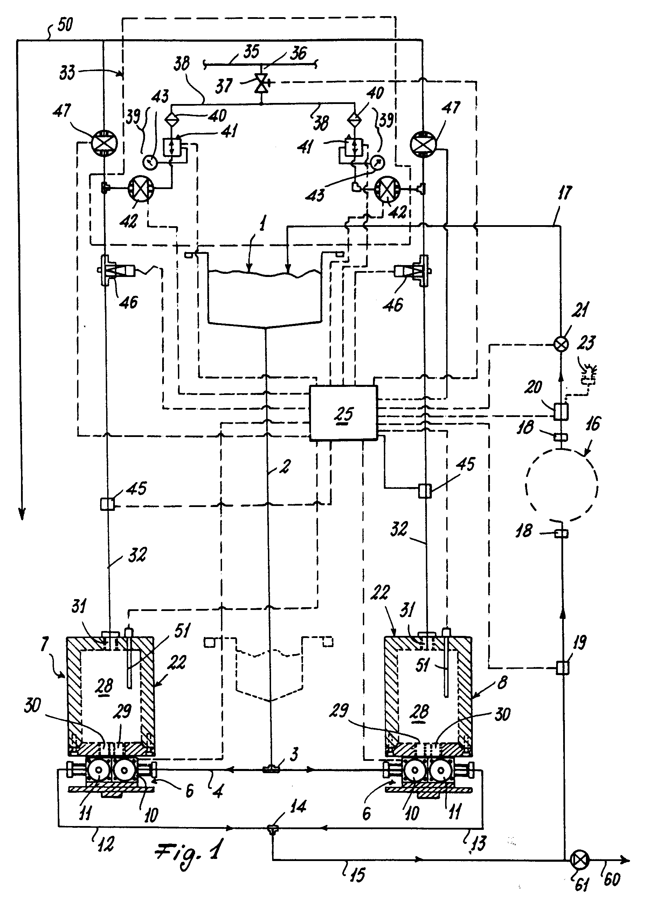

As shown in Figure 1, the tank 1 is positioned at a level higher than that of the buffer vessels 7 and 8. This enables said buffer vessels to be rapidly filled without pumps by the "communicating vessels" effect between the tank and buffer vessels during the use of the plant under examination (and the implementation of the method of the invention).

In this respect during the use of the plant, assuming an initial stage in which the buffer vessels 7 and 8 do not contain liquid to be filtered, the pressurizing fluid passes from the main 35 to the pipes 36, 38 and 32. This fluid then reaches the buffer vessels and a defined and desired pressure is established within them, said pressure being obtained and maintained by operating on the pressure regulators 41 and solenoid valves 42 via the unit 25.

The unit 25 then operates for example the actuator 10 of a single valve unit 6, for example of the buffer vessel 7. In this manner the liquid to be filtered passes from the tank 1 into said buffer vessel via the pipes 2 and 4. This takes place against the pressure present in the buffer vessel 7 generated by the fluid arriving from the main 35. To enable the buffer vessel to be filled, the unit 25 closes the solenoid valve 42 (of that part of the circuit 39 corresponding to the buffer vessel 7 under examination) and opens the vent valve 47.

In this manner the liquid to be filtered is able to reach the buffer vessel 7, and by the communicating vessels effect passes through the pipe 32 until it reaches the level of the liquid in the tank 1. This is sensed by the sensor 46, which is preferably located at the same level as the tank 1, or at the maximum possible level which the liquid fed into it can reach.

When the buffer vessel 7 has been filled, the unit 25 halts the actuator 10 of the valve unit 6 corresponding to this buffer vessel, and operates the actuator 11 of that valve unit. At the same time it operates the actuator 10 of the valve unit 6 on the buffer vessel 8, which then fills with the liquid to be filtered in the manner already described.

Liquid passes from the buffer vessel 7 through the pipe 12 and then through the pipe 15 to reach the station 16 where it is filtered. It then returns to the tank 1. This is achieved by the pressure exerted on the moving liquid by that present in the buffer vessel 7 (ie by the hydrostatic head of the liquid) on which the pressure of the pressurizing fluid acts.

In this respect, after this latter has been vented and when the product to be filtered reaches the sensor 46, the unit 25 closes the valve 47 and, during the discharge of the liquid to be filtered from the buffer vessel, reopens the valve 42. This enables the pressurizing fluid to again act on the liquid to be filtered, with consequent pressure on the product fed to the filtering station.

As the outflow of liquid from the buffer vessel 7 takes place in a time preferably greater than the time for filling the buffer vessel 8 (ie its filling time assuming that the buffer vessels have substantially identical geometrical and constructional characteristics), when the liquid level in the buffer vessel 7 (measured in any known manner) is close to zero, the unit 25 closes the actuator 10 of the valve unit 6 of the buffer vessel 8 and opens the actuator 11 of this valve unit. This allows the feed of further liquid to be filtered through the pipe 13 and through the pipe 15, the flow of liquid through this latter being maintained uniform and continuous without pulsation being generated within it.

When all the liquid present in the buffer vessel 7 has been discharged, the unit 25 closes the actuator 10 and opens the actuator 11 of the valve unit 6 of the buffer vessel 7 in the described manner to enable it to be again filled, while the buffer vessel 8 discharges.

Consequently, while one buffer vessel is discharging the other is being substantially filled with liquid to be filtered; in addition, when one buffer vessel is nearly empty, the liquid to be filtered begins to flow from the other buffer vessel. This enables a constant throughput to be maintained in the pipe 15, with a uniform and continuous flow of liquid to be filtered. Consequently the filter in the station 16 is constantly exposed to a uniform flow and cannot suffer any mechanical damage, as happens in known plants using pumps.

In addition the cycle is closed, so that the same liquid can be filtered several times until the desired purity is achieved. On termination, it is discharged through a discharge pipe 60 which is connected to the pipe 15 via a solenoid valve 61.

If necessary, the liquid can be heated by the resistance elements 51.

As an alternative to that described and represented, the tank 1 can be positioned at the same level as the buffer vessels 7 and 8, provided obviously that the liquid level in this tank is higher than the top of the buffer vessels.

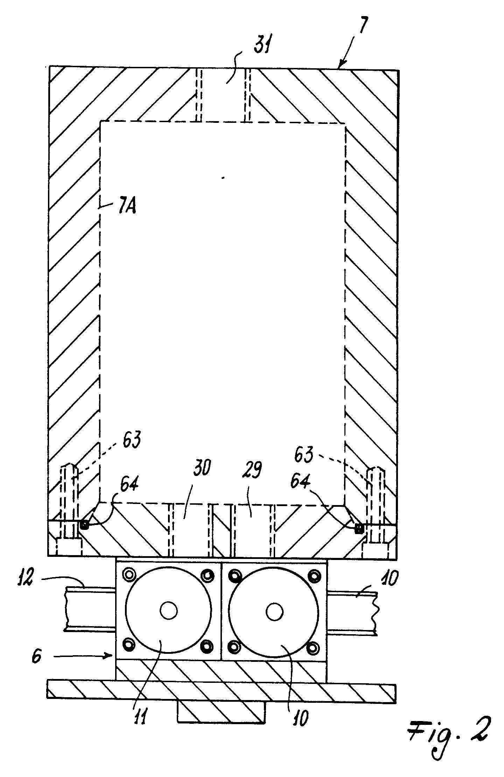

Preferably (see Figure 2), these latter are constructed in two parts (7A, 7B and 8A, 8B) joined together by screws 63; usual seal members 64 are provided in the contacting regions.

According to a further embodiment of the invention, the tank 1 can be connected to a single vessel of very large volume to contain a considerable volume of fluid able to be filtered in a single pass. In this case the station 16 contains several filters in cascade or several filtering stations are connected in series to the single vessel.

## Claims

1. A method for filtering a liquid chemical product, such as a solvent, by at least one filter, such as a microfilter, contained in a filtering station (16), the liquid being located in a storage tank (1) and being fed to at least two different buffer vessel (7,8), said storage tank (1) being positioned at the same or a higher level than said buffer vessels, comprising the following step:
a) feeding said liquid product into a first buffer vessel (7) against a pressure present in the latter created by a pressurising fluid introduced in said vessel using a difference of hydrostatic pressure between the vessel (7) and the storage tank (1), after releasing said pressure, said vessel (7) being filled, the pressurising fluid being expelled from the buffer vessel (7) by the entering product to be filtered;
b) after the entering product has reached a fixed level, feeding the pressurising fluid into said vessel (7) and discharging said liquid product by action of the pressurising fluid, said liquid product being then fed to the filtering station (16);
c) while performing step b) in the first vessel, repeating step a) for the other vessel(s) and vice versa, whereby feeding the liquid solvent from one buffer vessel to the filtering station (16) partly overlaps with feeding the liquid solvent from the other vessel(s) to said filtering station (16), so that the liquid product is being fed to said filtering station at a constant pressure and rate.

2. A method as claimed in claim 1, characterised in that the pressure in the various buffer vessels (7,8) is controlled independently.

3. A method as claimed in claim 1, characterised in that throughout a predetermined number of successive filtration cycles the product returns to each buffer vessel (7,8) after filtration in the filtering station (16), said product hence undergoing a plurality of consecutive closed filtration cycles.

4. A plant for implementing the method claimed in claim 1, comprising at least two buffer vessels (7,8) able to receive and contain for a determined time period a liquid product to be filtered originating from a storage tank (1) positioned at a level higher than or equal to that of the buffer vessels (7,8), comprising means (33) to provide a pressurising fluid connected to each buffer vessel (7,8) for generating a fixed pressure level within it, vent means (47) for reducing said pressure while filling the buffer vessel (7,8) with the product to be filtered, the buffer vessels (7,8) being connected to a filtering station (16) via at least one pipe (15), a valve unit (6) associated with each buffer vessel (7,8), said valve unit comprising a first actuator (10) connected to a pipe (2) connecting the tank (1) to the buffer vessel (7,8), and a second actuator (11) connected to the pipe (15) connected to the filtering station (16).

5. A plant as claimed in claim 4, characterised by comprising a further return pipe (17) connecting the filtering station (16) to the tank (1) containing the product to be filtered, in said further pipe (17) there being provided at least one pressure switch (20) and a valve member (21) arranged to control the pressure in the pipe (15) connecting the buffer vessel (7,8) to the filtering station (16).

## Patentansprüche

1. Verfahren zum Filtern eines flüssigen chemischen Produkts, wie ein Lösungsmittel, mit zumindest einem Filter, wie ein Mikrofilter, der in einer Filterstation (16) vorgesehen ist, wobei die Flüssigkeit in einem Speichertank (1) enthalten ist und zumindest zwei verschiedenen Pufferbehältnissen (7, 8) zugeführt wird, wobei sich der Speichertank (1) auf der gleichen oder einer höheren Ebene befindet wie die Pufferbehältnisse, mit den folgenden Schritten:
a) Einleiten des flüssigen Produkts in ein erstes Pufferbehältnis (7) gegen einen darin vorhandenen Druck, der durch ein in das Behältnis eingeführtes Druckfluid erzeugt wird, unter Nutzung einer hydrostatischen Druckdifferenz zwischen dem Behältnis (7) und dem Speichertank (1), wobei das Behältnis (7) nach dem Abbau des Drucks gefüllt wird, wobei das Druckfluid durch das eintretende, zu filternde Produkt aus dem Pufferbehältnis (7) ausgestoßen wird;
b) Einleiten des Druckfluids in das Behältnis (7) und Ausstoßen des flüssigen Produkts durch Wirkung des Druckfluids, nachdem das eintretende Produkt eine feststehende Füllhöhe erreicht hat, wobei das flüssige Produkt dann zu der Filterstation (16) geleitet wird;
c) Wiederholen von Schritt a), während Schritt b) in dem ersten Behältnis durchgeführt wird, für das (die) andere(n) Behältnis(se) und umgekehrt, wodurch sich das Einleiten des flüssigen Lösungsmittels von einem Pufferbehältnis zu der Filterstation (16) teilweise mit dem Einleiten des flüssigen Lösungsmittels von dem (den) anderen Behältnis(sen) zu der Filterstation (16) überlappt, so daß das flüssige Produkt mit konstantem Druck und Geschwindigkeit zur Filterstation geleitet wird.

2. Verfahren nach Anspruch 1, **dadurch gekennzeichnet**, daß der Druck in den verschiedenen Pufferbehältnissen (7, 8) unabhängig gesteuert wird.

3. Verfahren nach Anspruch 1, **dadurch gekennzeichnet**, daß das Produkt nach der Filtration in der Filterstation (16) mit einer vorbestimmten Anzahl von aufeinanderfolgenden Filtrationszyklen zu jedem Pufferbehältnis (7, 8) zurückgeführt wird, wodurch das Produkt eine Vielzahl von aufeinanderfolgenden, geschlossenen Filtrationszyklen durchlaufen hat.

4. Vorrichtung zur Durchführung des Verfahrens nach Anspruch 1, mit zumindest zwei Pufferbehältnissen (7, 8), die in der Lage sind, für eine bestimmte Zeitdauer ein zu filterndes, flüssiges Produkt aufzunehmen und zu speichern, das aus einem Speichertank (1) stammt, der sich auf einer höheren oder der gleichen Ebene befindet wie die Pufferbehältnisse (7, 8), mit Einrichtungen (33), um ein Druckfluid zur Verfügung zu stellen, die mit jedem Pufferbehältnis (7, 8) verbunden sind, um darin einen festen Druckpegel zu erzeugen, mit Auslaßeinrichtungen (47), um den Druck zu vermindern, während das Pufferbehältnis (7, 8) mit dem zu filternden Produkt gefüllt wird, wobei die Pufferbehältnisse (7, 8) durch zumindest eine Rohrleitung (15) mit einer Filterstation (16) verbunden sind, einer Ventileinheit (6), die mit jedem Pufferbehältnis (7, 8) in Beziehung steht, wobei die Ventileinheit ein erstes Betätigungsmittel (10), das mit einer Rohrleitung (2) verbunden ist, durch die der Tank (1) mit dem Pufferbehältnis (7, 8) verbunden ist, und ein zweites Betätigungsmittel (11) hat, das mit der Rohrleitung (15) verbunden ist, die mit der Filterstation (16) verbunden ist.

5. Vorrichtung nach Anspruch 4, **dadurch gekennzeichnet**, daß eine weitere Rückführ-Rohrleitung (17) vorgesehen ist, durch die die Filterstation (16) mit dem Tank (1) verbunden ist, der das zu filternde Produkt enthält, wobei diese weitere Rohrleitung (17) mit zumindest einem Druckschalter (20) und einem Ventilbauteil (21) versehen ist, das dazu ausgestaltet ist, um den Druck in der Rohrleitung (15) zu steuern, durch die das Pufferbehältnis (7, 8) mit der Filterstation (16) verbunden ist.

## Revendications

1. Procédé de filtrage d'un produit chimique liquide, tel qu'un solvant, par au moins un filtre, tel qu'un microfiltre, contenu dans un poste de filtrage (16), le liquide étant situé dans un réservoir de stockage (1) et étant amené à au moins deux récipients tampons différents (7, 8), ledit réservoir de stockage (1) étant positionné au même niveau que lesdits récipients tampons, ou à un niveau supérieur à ceux-ci, comportant les étapes suivantes consistant à :
a) amener ledit produit liquide dans un premier récipient tampon (7) à l'encontre d'une pression présente dans ce dernier, créée par un fluide de pressurisation introduit dans ledit récipient, en utilisant une différence de pression hydrostatique entre le récipient (7) et le réservoir de stockage (1), après relachement de ladite pression, ledit récipient (7) étant rempli, le fluide de pressurisation étant expulsé du récipient tampon (7) par le produit entrant à filtrer,
b) après que le produit entrant a atteint un niveau fixe, amener ledit fluide de pressurisation dans ledit récipient (7) et décharger ledit produit liquide par action du fluide de pressurisation, ledit produit liquide étant alors envoyé au poste de filtrage (16),
c) tout en effectuant l'étape b) dans le premier récipient, répéter l'étape a) pour le ou les autres récipients et vice versa, de sorte que l'amenée du solvant liquide depuis un récipient tampon au poste de filtrage (16) chevauche partiellement l'amenée du solvant liquide depuis l'autre ou les autres récipients au poste de filtrage (16), de sorte que le produit liquide est amené au poste de filtrage à une pression et une vitesse constantes.

2. Procédé selon la revendication 1, caractérisé en ce que la pression dans les divers récipients tampons (7, 8) est commandée de manière indépendante.

3. Procédé selon la revendication 1, caractérisé en ce que tout au long d'un nombre prédéterminé de cycles de filtration successifs, le produit revient dans chaque récipient tampon (7, 8) après filtration dans le poste de filtrage (16), ledit produit subissant donc une pluralité de cycles de filtration fermés consécutifs.

4. Installation pour mettre en oeuvre le procédé selon la revendication 1, comportant au moins deux récipients tampons (7, 8) capables de recevoir et de contenir pendant une période de temps déterminée un produit liquide à filtrer provenant d'un réservoir de stockage (1) positionné à un niveau supérieur ou égal à celui des récipients tampons (7, 8), comportant des moyens (33) pour fournir un fluide de pressurisation reliés à chaque récipient tampon (7, 8) afin de produire un niveau de pression fixe à l'intérieur, des moyens de purge (47) pour réduire ladite pression tout en remplissant le récipient tampon (7, 8) avec le produit à filtrer, les récipients tampons (7, 8) étant reliés à un poste de filtrage (16) via au moins un tuyau (15), une unité de vanne (6) associée à chaque récipient tampon (7, 8), ladite unité de vanne comportant un premier actionneur (10) relié à un tuyau (2) reliant le réservoir (1) au récipient tampon (7, 8), et un second actionneur (11) relié au tuyau (15) relié au poste de filtrage (16).

5. Installation selon la revendication 4, caractérisée en ce qu'elle comporte un autre tuyau de retour (17) reliant le poste de filtrage (16) au réservoir (1) contenant le produit à filtrer, et en ce que dans ledit autre tuyau (17) sont prévus au moins un mano-contact (20) et un élément formant vanne (21) agencés pour commander la pression dans le tuyau (15) reliant le récipient tampon (7, 8) au poste de filtrage (16).
